# EUROPEAN PATENT APPLICATION

(11) **EP 4 840 288 A1**
(43) Date of publication of application: **18.11.2026**
(21) Application number: 26177993.8
(22) Date of filing: 11.05.2026
(51) Int. Cl.: A01D 43/063, A01D 43/077

(54) **QUICK-CONNECT AUGER SYSTEM FOR OUTDOOR POWER EQUIPMENT**

(30) Priority: 14.05.2025 US 202563805481 P
(71) Applicant: MTD Products Inc., Valley City, OH 44280 (US)
(72) Inventor: SCHAEDLER, Axel, Valley City, 44280 (US)
(74) Representative: SBD IPAdmin

(57) **Abstract**

A turf maintenance apparatus with an auger device for transporting turf clippings out from a mowing implement of the turf maintenance apparatus can enhance efficiency for a bagging implementation oof the turf maintenance apparatus. The auger can convey turf clippings, leaves, vegetation and other material expelled from a mow deck of the turf maintenance apparatus to a receptacle, bag or the like. Moreover, an auger housing can be readily disassembled to facilitate access to the screw auger and an interior of the auger housing for clearing debris in the field. In some aspects of the disclosure the disassembly mechanism can be toolless, facilitating easy operator access to interior components of the auger housing.

## Description

### INCORPORATION BY REFERENCE

U.S. Provisional Application No. 63/454,607 filed March 24, 2023, and titled AUGER DEVICE FOR TRANSPORTING TURF CLIPPINGS FROM A TURF MAINTENANCE MACHINE, U.S. Provisional Application No. 63/535,660 filed August 31, 2023, and titled AUGER SYSTEM AND APPARATUS FOR OUTDOOR POWER EQUIPMENT and U.S. Non-Provisional Application No. 18/615,618 filed March 25, 2024, and titled AUGER SYSTEM AND APPARATUS FOR OUTDOOR POWER EQUIPMENT are hereby incorporated by reference herein in their respective entireties and for all purposes.

### FIELD OF DISCLOSURE

The disclosed subject matter pertains to systems, apparatuses, and methods for an outdoor power equipment (*e.g.,* a turf maintenance machine, etc.), for instance, providing an auger device for transporting material from the outdoor power equipment.

### BACKGROUND

Manufacturers of power equipment for outdoor maintenance applications offer many types of machines for general maintenance and mowing applications. Generally, these machines can have a variety of forms depending on application, from general urban or suburban lawn maintenance, rural farm and field maintenance, to specialty applications. Even specialty applications can vary significantly. For example, mowing machines suitable for sporting events requiring moderately precise turf, such as soccer fields or baseball outfields may not be suitable for events requiring very high-precision surfaces such as golf course greens, tennis courts and the like.

Modern maintenance machines also offer multiple options for a power source. The various advantages associated with electric motor engines, gasoline engines, natural gas engines, diesel engines and so forth also impact the mechanical design and engineering that go into these different maintenance devices. Meeting the various challenges associated with different maintenance and mowing applications and the benefits and limitations of different power sources results in a large variety of maintenance machines to meet consumer preferences.

### BRIEF SUMMARY

The following presents a simplified summary in order to provide a basic understanding of some aspects of the disclosure. This summary is not an extensive overview of the disclosure. It is not intended to identify key/critical elements or to delineate the scope of the disclosure. Its sole purpose is to present some concepts of the disclosure in a simplified form as a prelude to the more detailed description that is presented later.

Embodiments of the present disclosure provide an outdoor power equipment (e.g., a turf maintenance apparatus, etc.) with an auger for transporting material (e.g., turf clippings, etc.) out from the outdoor power equipment (e.g., from a mowing implement of the turf maintenance apparatus, etc.). In some embodiments, the auger can be configured for convenient access to an interior thereof. For instance, the auger can be opened, (partially) disassembled, or the like, and conveniently closed or reassembled by an operator in the field to permit easy cleaning of the auger, in-field removal of obstructions, and so forth.

In at least one aspect, a screw auger device can be disconnected from an auger housing and removed both from the auger housing and an associated power source, to facilitate rapid in-field access to an interior of the auger housing or to the screw auger itself, or both. In another aspect, an auger tube housing can be disconnected and removed from a screw auger device and support to facilitate the rapid in-field access to the interior of the auger tube housing or to the screw auger device itself, or both. In still another aspect, the auger tube housing can be opened, de-attached, lifted off, *etc.,* to facilitate rapid in-field access to the screw auger device and interior of the auger but housing, or both. Moreover, in various aspects, the disconnected screw auger device or auger tube housing can be readily replaced (or closed / re-attached) and resecured to its housing or base support, as suitable, and power source to re-engage the auger device in transporting material from a maintenance machine as disclosed throughout the present specification.

Further aspects disclose a conveyance system for an outdoor power equipment. The conveyance system can comprise an auger housing having a first end near a discharge opening in a mow deck of the outdoor power equipment and a second end of the auger housing away from the mow deck of the outdoor power equipment and a screw auger extending along at least a portion of an interior length of the auger housing. In various aspects, the auger housing and screw auger are configured to transport material received from the discharge opening at a first end of the auger housing out of a second end of the auger housing, wherein the auger housing further comprises: a base support underlying the screw auger, and a housing tube that overlies the screw auger. Moreover, the conveyance system can comprise a mow deck coupler having a first end configured to secure to and to substantially cover at least a portion of the discharge opening of the mow deck, wherein a second end of the coupler is connected to the first end of the auger housing, and wherein the coupler is configured to receive the material from the discharge opening of the mow deck and to provide the material to the first end of the auger housing. The conveyance system can additionally comprise an ejector housing at a second end of the auger housing that receives the material from the discharge opening and distributes the material out from the second end of the auger housing. The conveyance system can further comprise a decoupling mechanism that exposes the screw auger from an interior of the housing tube that overlies the screw auger.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

Figure 1 provides an image of an example auger device coupled to a mowing apparatus according to one or more embodiments of the present disclosure;
Figure 2 depicts an image of a rear perspective view of a mowing apparatus and example auger device ejecting material to a container, in aspects of the disclosed embodiments;
Figure 3 provides an image of an ejector housing at an intersection of an ejector and auger device, detailing further aspects of the disclosed embodiments;
Figure 4 is an image of an overhead perspective view of the ejector housing and auger device at the intersection thereof, in another aspect(s);
Figure 5 shows an image of a disconnection of the ejector housing and screw auger device from an auger tube housing of the auger device, in further aspects of the disclosure;
Figure 6 depicts an image of a closeup of a quick connect power wire device to facilitate disconnecting the ejector housing and screw auger device from a power source;
Figure 7 is a closeup image of an interface connector securing the ejector housing and auger tube housing that facilitates rapid connection and disconnection thereof;
Figure 8 shows an image of an example screw auger device secured to an ejector housing removed from an auger tube housing for ease of access to the screw auger device;
Figure 9 is an image of an end-view of the auger tube housing with ejector housing and screw auger device removed therefrom and access to an interior thereof;
Figure 9A is a closeup image of a fixed bearing that facilitates easy in-field re-connection of the screw auger device into the auger tube housing to resume operation;
Figure 10 is an image of the screw auger device re-inserted into the auger tube housing and the fixed bearing of Figure 9A in additional aspects of the disclosed embodiments;
Figure 11 shows an image of an end of the screw auger device secured to an ejector housing bearing and auger drive device in one or more additional aspects;
Figure 12 is an image of an example power generator to operate an electric motor associated with the auger drive device;
Figure 13 is an image of a second example power generator to operate the electric motor of the auger drive device according to various aspects discussed herein.

It should be noted that the drawings are diagrammatic and not drawn to scale. Relative dimensions and proportions of parts of the figures have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to transporting turf clippings from a mow deck of power equipment machines are described herein, it should be understood that the disclosed machines, electronic and computing devices and methods are not so limited and modifications may be made without departing from the scope of the present disclosure. The scope of the devices, components of such devices, coupling apparatuses and power sources are defined by the appended claims, and all devices, components, and apparatuses that come within the meaning of the claims, either literally or by equivalence, are intended to be embraced therein.

### DETAILED DESCRIPTION

The following terms are used throughout the description, the definitions of which are provided herein to assist in understanding various aspects of the subject disclosure.

As used in this application, the terms "outdoor power equipment," "outdoor power equipment machine," "power equipment," "maintenance machine," "turf maintenance machine," "lawn maintenance apparatus," and "power equipment machine" are used interchangeably and are intended to refer to any of robotic, partially robotic ride-on, manually operated ride-on, walk-behind, sulky equipped, autonomous, semi-autonomous (*e.g.,* user-assisted automation), remote control, or multi-function variants of any of the following: powered carts and wheel barrows, motorized or non-motorized trailers, lawn mowers, lawn and garden tractors, cars, trucks, go-karts, scooters, buggies, powered four-wheel riding devices, powered three-wheel riding devices, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment. Operator controlled vehicles can also be implemented in conjunction with various embodiments of the present disclosure directed to selectively powered caster wheel steering.

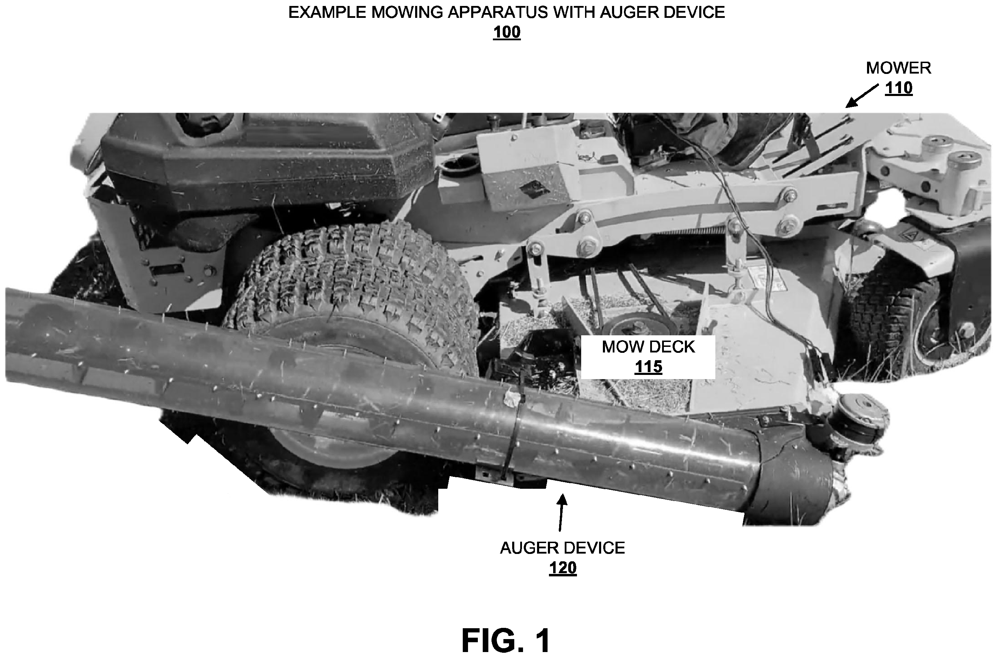

Figure 1 provides an image of a mowing apparatus 100 with auger for transfer of turf clippings according to various embodiments of the present disclosure. Mowing apparatus 100 can be a ride-on maintenance apparatus in an implementation (*e.g.,* a seated ride-on maintenance apparatus; a stand-on ride-on maintenance apparatus), but is not limited to this implementation and can be a sulky-equipped apparatus, a walk-behind apparatus, a tow-behind apparatus, and so forth. Additionally, while various embodiments are discussed in connection with a mowing apparatus for the purposes of illustration, other embodiments can be employed on other types of outdoor power equipment (*e.g.,* a thatcher for removing thatch, outdoor power equipment for leaf removal, street sweeping, etc.).

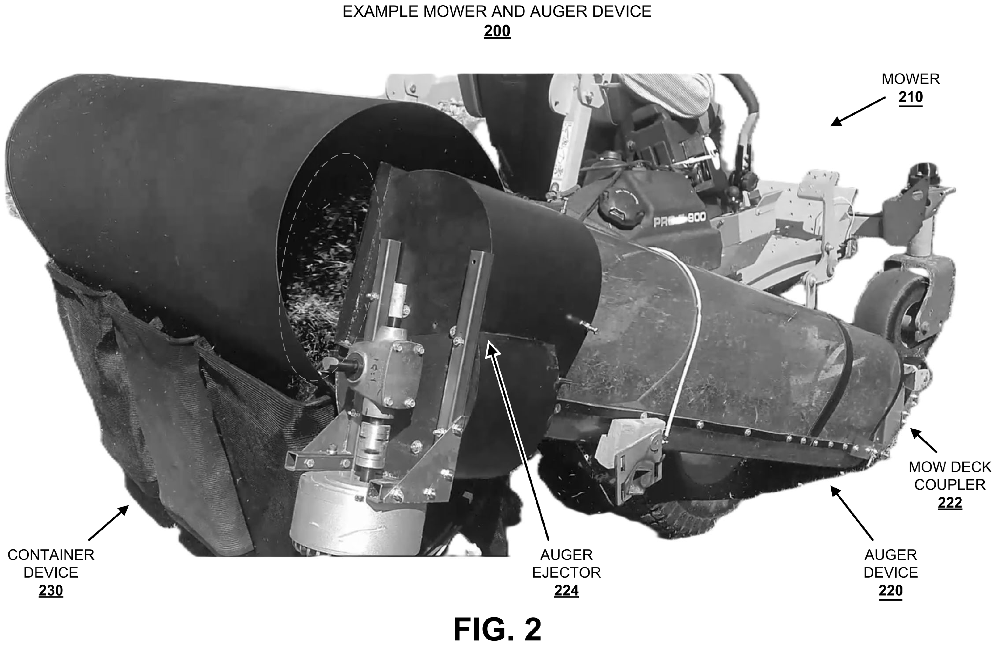

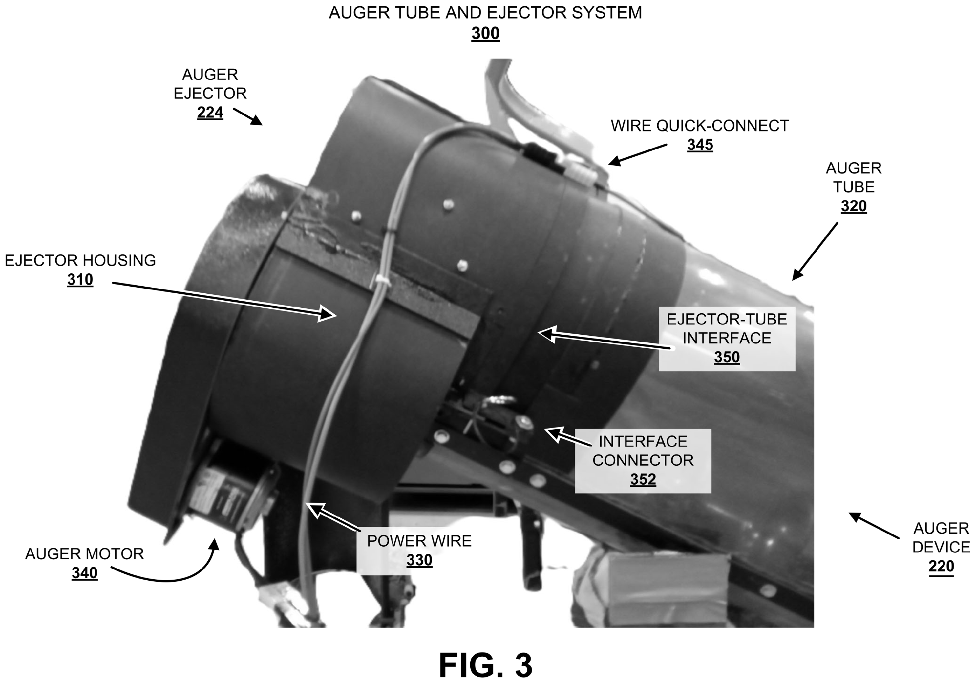

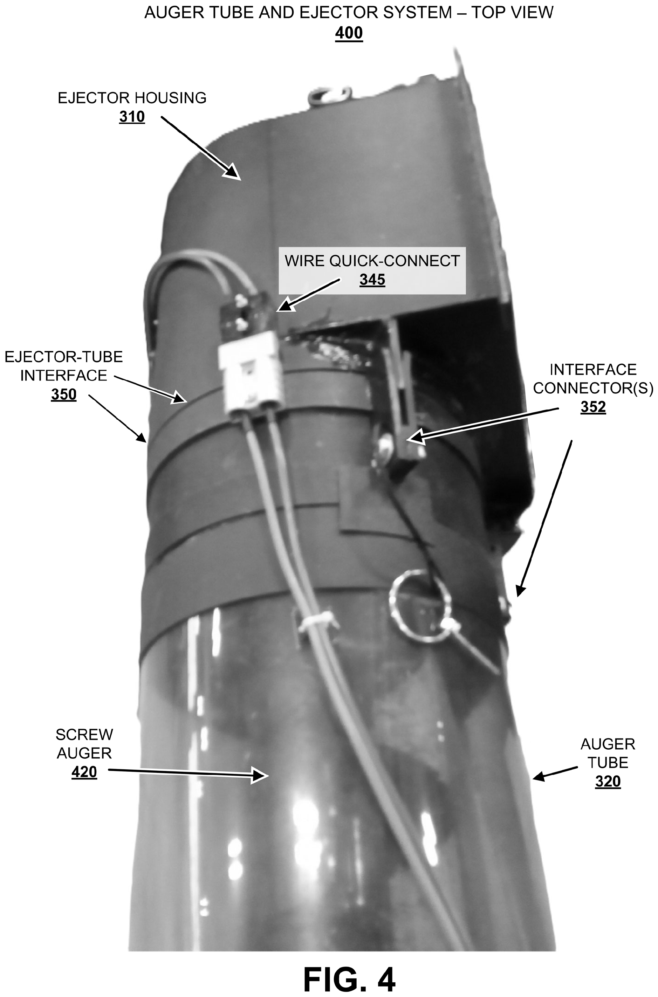

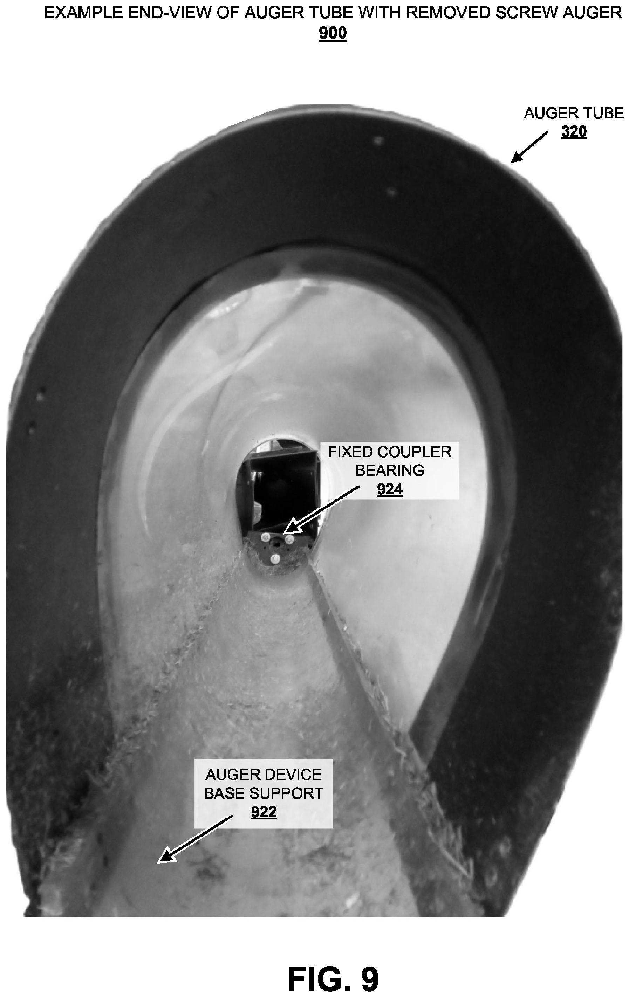

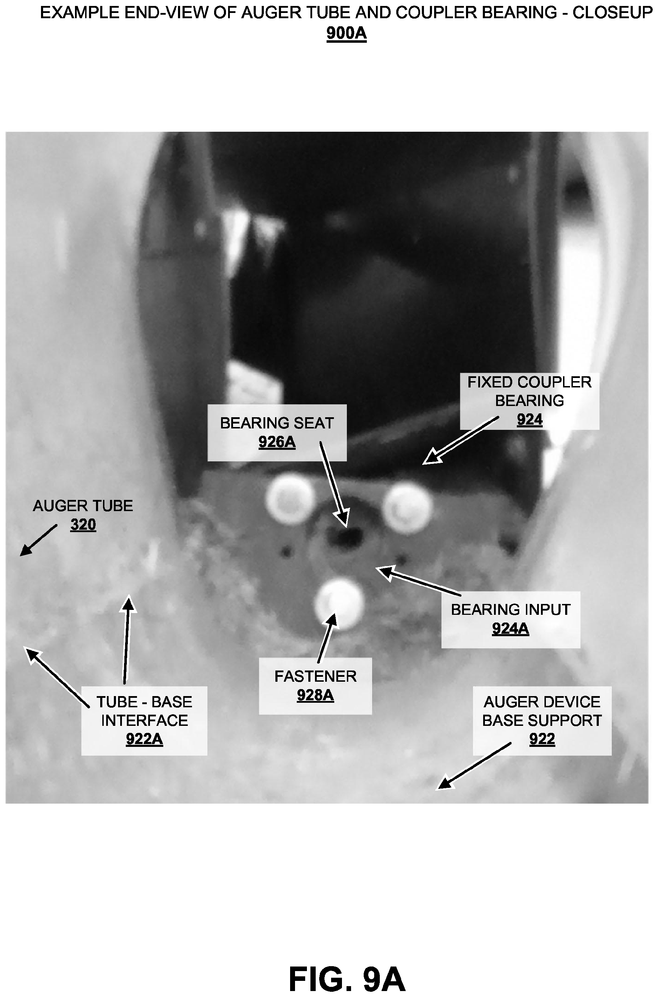

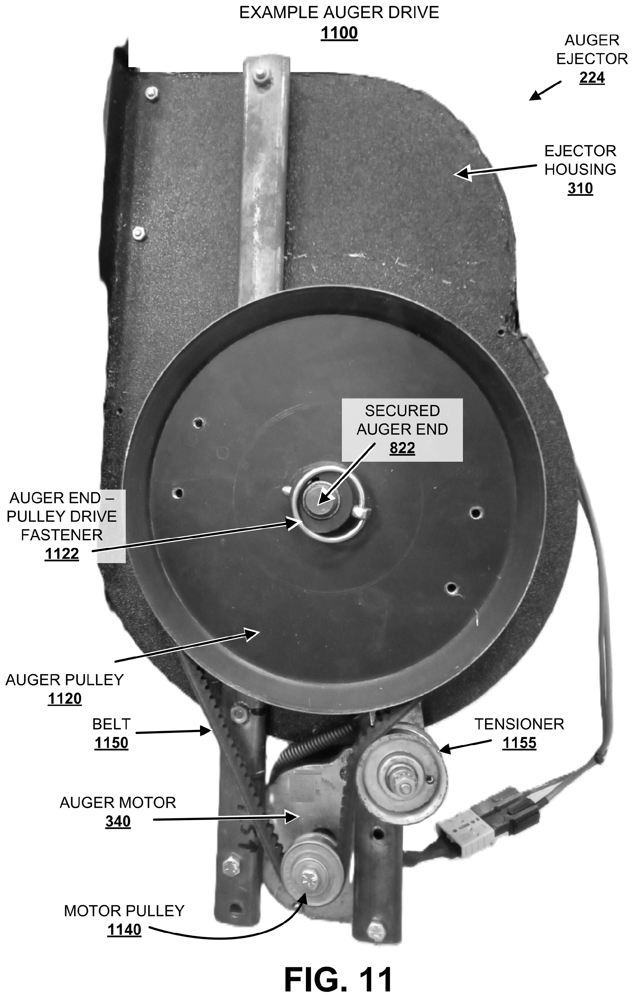

Mowing apparatus 100 comprises an auger device 120 within an auger housing (*e.g.,* see Figures 3 and 4, *infra*) secured to a mow deck 115 of a mower 110. An auger motor (not shown, but see Figure 11, *infra*) can be provided to power rotation of a screw auger of auger device 120. The auger motor can be activated (and deactivated) in conjunction with power being applied to an implement of mow deck 110 (*e.g.,* power applied to cutting blades within mow deck 115) or can be activated (and deactivated) independently of power supplied to mow deck 115 in alternative aspects of the disclosed embodiments. In some embodiments, one of activation and/or deactivation of the auger motor can occur at one or more predetermined times after activation and/or deactivation of mow deck 115 (*e.g.,* activation of the auger motor can be concurrent with, or with a first delay after activation of mow deck 115 and/or deactivation of the auger motor can be concurrent with or with a second delay after deactivation of mow deck 115, wherein the first and second delays can be the same or different). The auger motor can have a first end coupled to a bearing within a mow deck coupler (*e.g.,* see Figures 2, 9 and 9A, *infra*). A rotating portion of the screw auger (*e.g.*, an end of a rotation shaft) can be coupled to the bearing within the mow deck coupler and a second portion of the screw auger can be coupled to the auger motor. In response to mechanical power generated by the auger motor, the screw auger of auger device 120 can rotate therein, and facilitate movement of material from mow deck 115 rearward of mower 110 (*e.g.,* see Figure 2, *infra*).

As shown in Figure 2, provided is another example mower and auger device 200 according to alternative or additional aspects of the present disclosure. Mower 210 includes an auger device 220 secured thereto at least in part by way of a mow deck coupler 222. For instance, mow deck coupler can secure to a discharge opening (not shown) in a mow deck of mower 210. Various embodiments of mow deck coupler 222 can be employed for various types of discharge from the mow deck (*e.g.,* side discharge, top discharge, rear discharge, etc.). Mow deck coupler 222 comprises an input interface to receive material (*e.g.,* yard waste such as turf clippings, leaves and/or other vegetation; relatively small (e.g., small enough to be moved by a system described herein) debris; relatively small litter; organic and/or inorganic waste material; etc.) from an interior of the mow deck and can direct the material into an auger tube of auger device 220. Rotation of the screw auger within auger device 220 driven by an auger motor causes one or more auger flights of the screw auger to rotate about a central rotation portion of the screw auger to transport at least a portion of the turf clippings, leaves, vegetation, *etc.,* contacting the auger flight(s) from a first end of the screw auger at mow deck coupler 222 to a second end thereof at auger ejector 224. The material can be ejected from auger device 220 by auger ejector 224 to a container device 230, as shown. Some material can be physically transported by rotation of the screw auger directly, while other material (*e.g.,* lightweight material) can ride an airflow within auger device 120 above the screw auger partway from the bottom to the top of auger device 220 or the entire way from the bottom to the top of auger device 220. (This air flow can result from various factors, including rotation of spindles/blades of a mow deck, rotation of the screw auger of auger device 220, motion of material within a tube housing of auger device 220, *etc.).* In alternative embodiments, material can be ejected from auger ejector 224 to the ground, or the like (*e.g.,* where container device 230 is removed).

As utilized herein, relative terms or terms of degree such as approximately, substantially or like relative terms such as about, roughly and so forth, are intended to incorporate ranges and variations about a qualified term reasonably encountered by one of ordinary skill in the art in fabricating or compiling the embodiments disclosed herein, where not explicitly specified otherwise. For instance, a relative term can refer to ranges of manufacturing tolerances associated with suitable manufacturing equipment (*e.g.,* injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic; e.g., a 0 to five-percent variance or a zero to ten-percent variance from precise mathematically defined value or characteristic, or any suitable value or range there between can define a scope for a disclosed term of degree. As examples, angles, sizes, speeds, *etc.* can have specific values or can have those values with a variance within reasonable manufacturing tolerances, for example, a variance of 0 to five-percent, or any suitable value or range based on reasonable manufacturing tolerance. These or similar variances can be applicable to other contexts in which a term of degree is utilized herein such as timing of a computer-controlled signal, power applied by a motor onto a component of a disclosed maintenance apparatus, accuracy of measurement of a physical effect (*e.g.,* a dimension, a torque output, an electric power consumption, *etc*.) or the like.

In various aspects of the closed embodiments, auger device 220 can include a bottom support portion (*e.g.,* see auger device base support 922 of Figure 9, *infra*) and can include an upper tube housing portion *(e.g.,* see auger tube 320 of Figure 3 and Figure 9, *infra*). The bottom support portion underlies a screw auger of auger device 220 but does not extend around an entire circumference thereof in at least some aspects of the disclosed embodiments. In such embodiments, the upper tube housing portion surrounds a second (upper) portion of the screw auger but not all of the circumference thereof. As an example, the bottom support portion of auger device 120 can underlie approximately a bottom half of the screw auger up to about half the circumference thereof. In another example, the bottom support portion can surround about two thirds of the screw auger, extending from a bottom thereof and coming up past half the circumference of screw auger. In at least some such aspects of the disclosure, the bottom support portion can surround another suitable portion between about one quarter the circumference and less than all of the circumference of the screw auger.

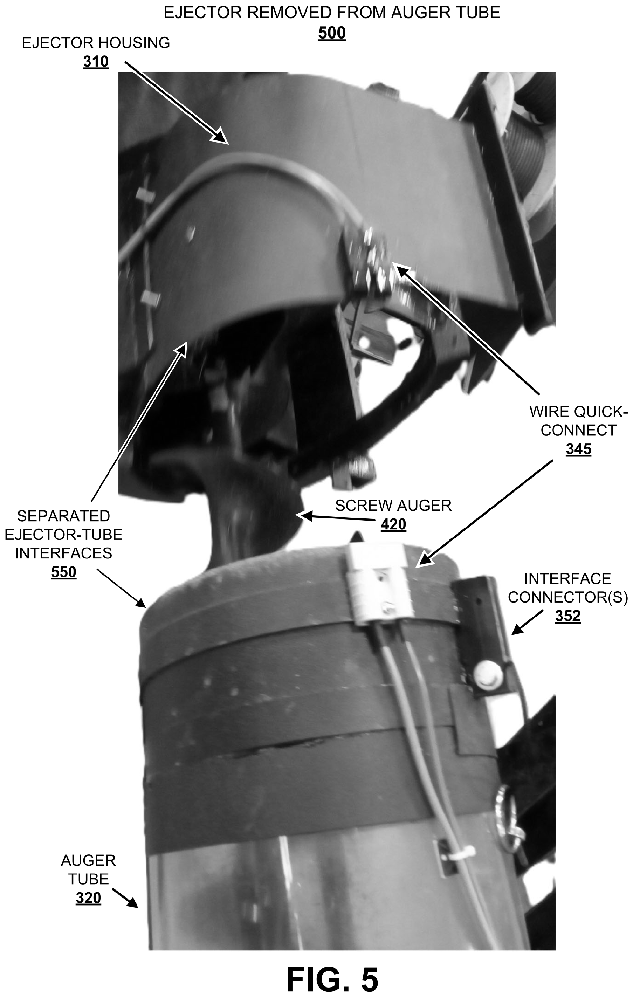

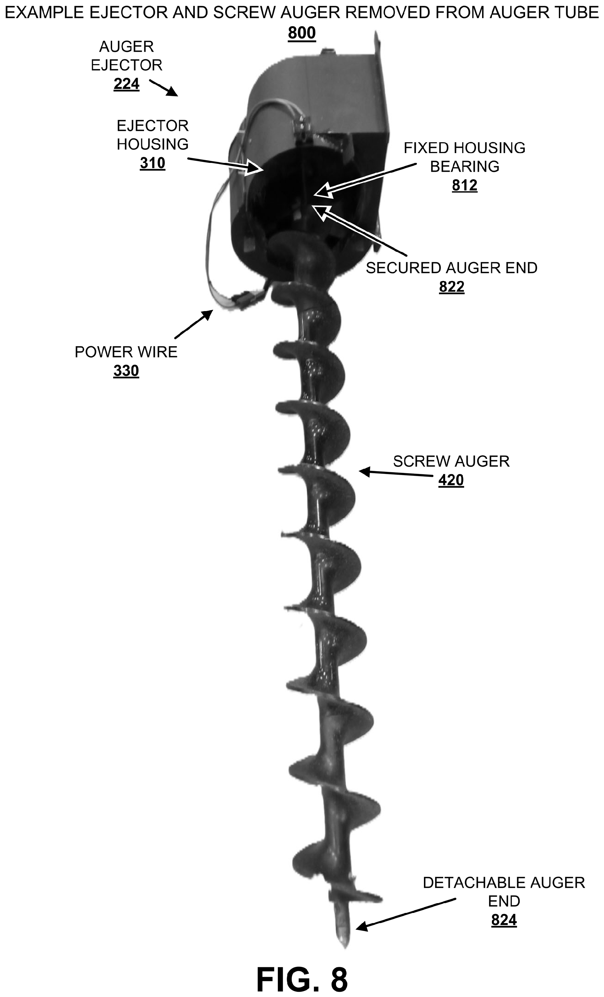

In some aspects of the disclosed embodiments, auger device 220 can be configured to facilitate ease of access to an interior thereof, or to interior components thereof, or a combination of the foregoing. In one aspect(s) of the present disclosure, a screw auger of auger device 220 can be removed from the auger device 220 to facilitate convenient cleaning of the screw auger or of an interior of the auger device 220 (*e.g.,* see Figures 5 and 8, *infra*). In another aspect, an upper tube housing of auger device 220 can be removed from a screw auger and from a bottom support portion to facilitate each of access to the screw auger and to the interior of the upper tube housing. In yet another aspect, the upper tube housing can be removed from the bottom support portion by a latch and release that, when latched, secures the upper tube housing to the bottom support portion. In yet another aspect, the upper tube housing can be rotated away from the bottom support portion and screw auger by a hinge and latch device, that when unlatched, facilitates rotation of the upper tube housing off of the bottom support portion and screw auger (*e.g.*, where fasteners are shown at an intersection of the upper tube housing of auger device 220 and bottom support portion, hinges can be positioned instead, allowing upper tube housing to rotate away from bottom support portion at the same intersection, in conjunction with a latching and unlatching mechanism at an opposite intersection of the upper tube housing and bottom support portion facing mower 210, such as tube-base interface 922A shown in Figure 9A, *infra*). Other mechanisms to facilitate convenient access to an interior of the auger device 220 known in the art or reasonably conveyed to one of ordinary skill in the art by way of the context provided herein are considered to be within the scope of the present disclosure.

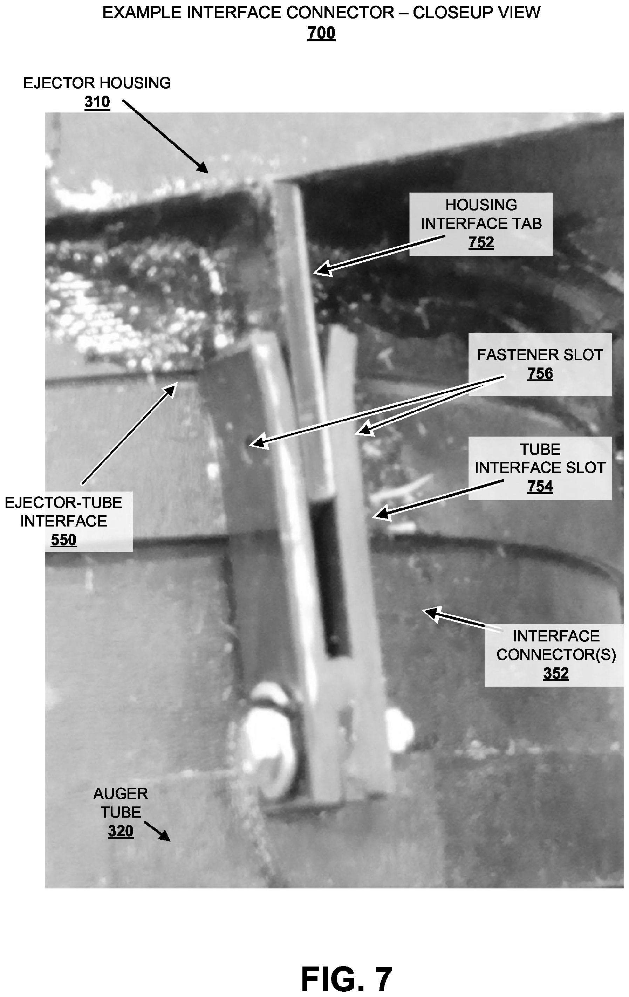

Figure 3 shows an auger tube and ejector system 300 for a disclosed auger device according to further aspects of the disclosed embodiments. Auger device 220 shows an auger tube 320 (*e.g.,* an upper tube housing portion, as discussed above) that is secured to auger ejector 224 at an ejector-tube interface 350. As shown, an ejector housing 310 of auger ejector 224 is secured to an end of auger tube utilizing one or more interface connectors 352. In the aspect depicted by Figure 3, a power wire 330 providing electrical power to an auger motor 340 secured to ejector housing 310 also is connected to a wire quick-connect 345 to facilitate connection and disconnection of the power wire 330 together with removal of auger ejector 224 from auger tube 320. By un-securing interface connector(s) 352 (*e.g.,* see Figure 7, *infra*) and wire quick-connect 345, auger ejector 224 (and a screw auger of auger device 220) can be removed from auger tube 320 to facilitate convenient in-field access to the screw auger, the interior of auger tube 320, the interior of ejector housing 310, and so forth. Auger ejector and the screw auger can be resecured to auger tube 320 by re-inserting the screw auger into auger tube 320 until ejector housing abuts an end of auger tube 320, and by resecuring interface connector(s) 352 and wire quick-connect 345.

In an alternative aspect of the disclosed embodiments, auger device 220 can alternatively have a coupler-tube interface (not depicted) between a bottom surface of auger tube 320 and a mow deck coupler 222 as shown in Figure 2. Similar interface connector(s) or wire quick connect(s) can facilitate disconnecting auger tube 320 (and optionally auger ejector 224) from mow deck coupler 222 to expose an interior of auger tube 320 and expose a screw auger of auger device 220 resting on a bottom support portion thereof. In such alternative embodiments, the screw auger remains stationary and auger tube 320 (and optionally auger ejector 224) are removed from a support structure of auger device 220. In still another alternative aspect of the disclosed embodiments, auger tube 320 can be removed from auger ejector 224, mow deck coupler 222 and the screw auger and bottom support portion thereof, to expose the screw auger and interior of the auger tube 320. In these latter aspects, auger tube 320 can be coupled to the bottom support portion by hinges at one intersection of auger tube 320 and the bottom support portion and a latch(es) at another intersection of auger tube 320 and the bottom support portion, as one example, or can be coupled to the bottom support portion by one or more quick-connectors (e.g., similar to interface connector(s) 352), latches, pins, snaps, or other suitable detachable mechanism. In at least one aspect of the disclosed embodiments, auger tube 320, auger ejector 224 or the screw auger can be assembled and disassembled by one or more of the foregoing, or by a like mechanism, or by a suitable combination of the foregoing.

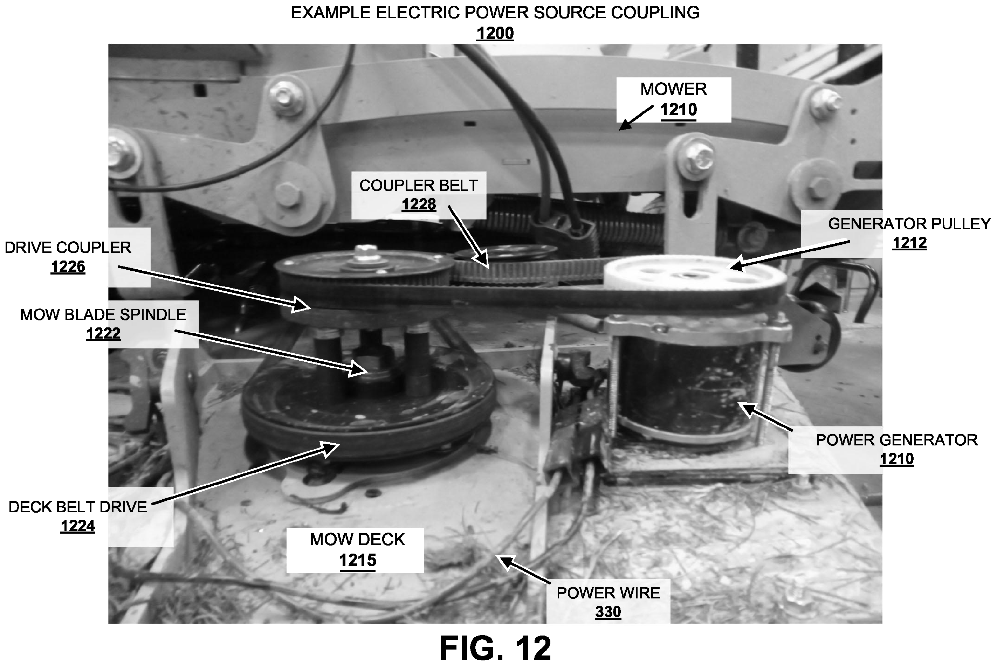

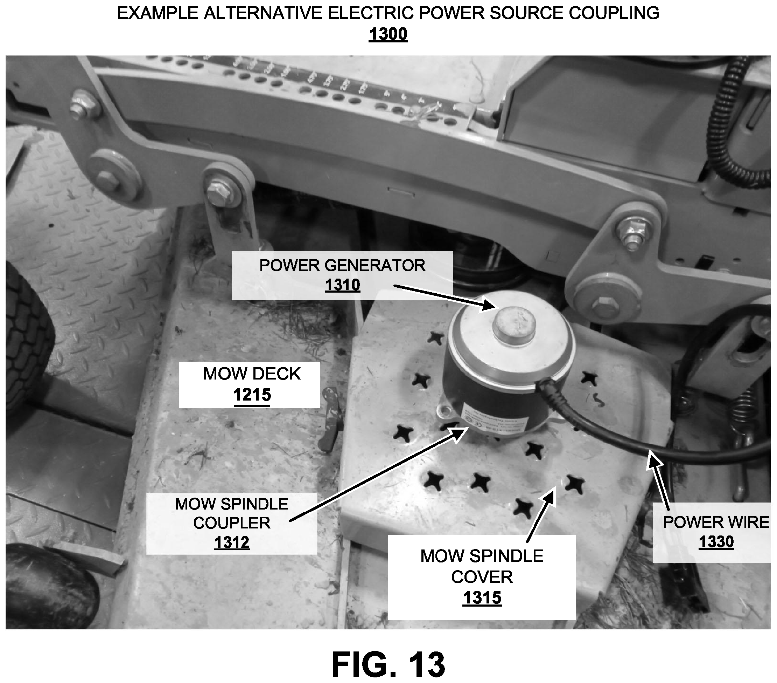

While Figure 3 illustrates an auger motor 340 proximate ejector housing 310 near an upper end of auger tube 320, in various embodiments, different techniques can be employed to rotate an auger in various embodiments discussed herein. A dedicated auger motor (*e.g.*, such as auger motor 340, *etc*.) can be positioned at ejector housing 310 as shown, or can be positioned at or near a mow deck 115 and secured to a lower end of a screw auger of auger device 220 in alternative embodiments (*e.g.,* at or near fixed coupler bearing 924 of Figure 9, *infra*). An auger motor 340 can be employed in various embodiments of a mowing apparatus, such as electrically-powered prime mover embodiments (*e.g*., a rechargeable power source that powers an electric prime mover can also power auger motor 340, *etc.*) and/or embodiments driven via a combustion engine (*e.g.,* gasoline, diesel, *etc.*) or other prime mover (*e.g.,* hydraulic; pneumatic, and so on), such as via electricity generated by a magneto of the internal combustion engine (*e.g.,* on larger outdoor power equipment, such as commercial mowing apparatuses, *etc.*). Alternatively, a separate charge generator can be provided (*e.g.,* see Figures 12 and 13, *infra*) which can be selected to provide sufficient current (e.g., 15A or more, 30A or more, 45A or more, *etc*.) to power auger device 220. Embodiments employing an auger motor can have the motor shaft perpendicular to the auger (*e.g.,* driving the auger via worm/bevel/hypoid gearing, etc., which can provide a gear ratio to rotate the auger at a different speed than the motor shaft, *etc*.)*,* can have a shaft parallel to the axis of rotation of the auger (*e.g.,* a motor drive shaft parallel or approximately parallel to the axis of rotation of the auger and coupled by a gear set, a belt and pulley set, or other suitable mechanical power exchange; see, *e.g.,* Figure 11, *infra*), or can have the motor shaft coaxial with the auger (*e.g.,* wherein planetary gearing, *etc.* can be employed to drive the auger at a different speed relative to the motor shaft, if desired).

Alternatively, an auger can be driven by an internal combustion engine of the outdoor power equipment, such as by coupling rotation of the auger to another component driven by the internal combustion engine (*e.g.,* a mow spindle of the mow deck), such as via gearing, belt(s), hydraulic motor(s), etc. In one illustrative example, a first hydraulic motor can be driven by a mow spindle of the mow deck, and a second hydraulic motor can be hydraulic-linked to and driven by the first hydraulic motor, wherein the second hydraulic motor can drive the screw auger of auger device 220.

In various embodiments, a motor and/or gear ratio can be selected based on target operating characteristics of the auger system and/or outdoor power equipment comprising the auger system, such as power available for operating the auger system, rotation speed of the motor (or other component(s) driving the auger), rotation speed(s) (*e.g.,* within a selected range) of the auger, a desired torque of the auger when rotating, *etc.* The example auger motor 340 shown in Figure 3 can be an 800 to 1000 watt motor, but various embodiments can employ greater or lesser power motors (*e.g.,* 0.5 - 3.5kW, 0.6kW - 1.5kW, *etc.,* or any suitable value or range therebetween). The pulley reduction in Figure 11 can employ about a 9:1 (*e.g.,* 8:1; 10:1, *etc*.) mechanical reduction, and greater or lesser reductions are within the scope of the present disclosure (*e.g.,* 5:1 - 12:1, 6:1 - 10:1, 8:1, 9:1, and so forth, or any suitable value or range there between). In one or more additional embodiments, a screw auger of auger device 220 can have a selected rotation speed provided by the auger motor and/or drive transmission. The rotation speed can be between about 150 rotations per minute (rpm) and about 500 rpm, or any suitable value or range there between (*e.g.,* 200 - 400 rpm; 250 - 350 rpm; 275 rpm; 350 rpm; 400 rpm; 500 rpm, and so on). Thus, a ratio of the output rotation speed of an auger motor and a speed reduction of a rotation transmission device can equal the rotation speed of the screw auger.

As introduced previously and with more detail now, auger device 220 shown in Figure 2 can have an elevated upper housing that provides significant air flow above an upper surface of a screw auger of auger device 220 and within an interior of auger tube 320 (*e.g.,* see Figure 9, *infra*). This allows material carried by moving air above the screw auger having insufficient momentum to continue through to auger ejector 224 at a second end of the auger tube 320 to drop onto the screw auger at some position along the length of the auger device 220. Such material can physically couple to flights of the auger at some distance beyond mow deck coupler 222 and be conveyed to auger ejector 224 by the auger. Other material can be carried from mow deck coupler 222 to auger ejector 224 by the airflow within auger tube 320 without physically contacting the screw auger of auger device 220. Accordingly, both airflow above the screw auger and the motion of the screw auger itself can transfer material from a mow deck of mower 210 to container device 230, in various aspects of the disclosed embodiments.

Figure 4 shows an overhead view 400 of the auger tube and ejection system 300 of Figure 3. A pair of interface connectors 352 are evident at ejector-tube interface 350 for securing (and de-securing) ejector housing 310 to (and from) auger tube 320. By decoupling the interface connectors 352 and wire quick-connect 345, ejector housing 310 and screw auger 420 can be removed from auger tube 320 as shown in Figure 5. The ejector removed from auger tube 500 shows separated ejector-tube interfaces 550 now decoupled from release of interface connector(s) 352. Wire quick-connect 345 can also physically separate to facilitate removal of ejector housing 310 from auger tube 320 as shown. Screw auger 420 of auger device 220, in the aspect shown in Figure 5, is secured at one end of screw auger 420 to ejector housing 310 (*e.g.,* see Figure 11, *infra*) and is removed from auger tube 320 by removal of ejector housing 310. This facilitates easy field access to screw auger 420, to an interior of ejector housing 310 and to an interior of auger tube 320 for cleaning, maintenance, repair, or other suitable purposes. This provides a significant advantage to an operator of a mower 210. The easy access to screw auger 420 and the interior of auger tube 320 allow an operator to quickly clear any clogs of material that might accumulate within auger device 220 in operation, or clear sticks, rocks or other obstruction, without having to remove mower 210 from operation. In the embodiments disclosed herein, minimal to no tools can be required to access screw auger 420 and the interior of auger tube 320, and to replace the screw auger 420 and ejector housing 310 for continued operation. For instance, aspects of the present disclosure can facilitate decoupling of auger ejector 224 and screw auger 420 (or more generally an interior of auger device 220) by hand only (*e.g.,* by an operator's hand(s)). This toolless access to the interior components of auger device 220 can provide a significant advantage over another device that cannot be opened without tools, or cannot be opened quickly in the field. Embodiments of the present disclosure minimize time required for cleaning and maintenance of what might otherwise be a self-enclosed, minimal-access material conveyance system, providing significant advantage, convenience and time and cost savings to an end user of mower 210, particularly in the commercial mowing space where downtime for maintenance, cleaning, obstruction removal and the like can be costly.

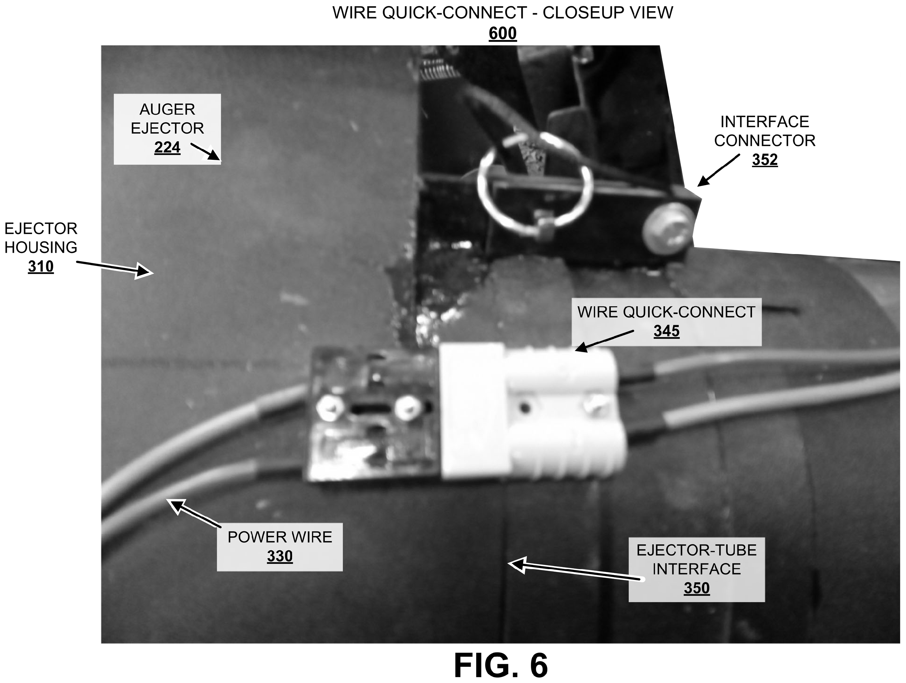

Figure 6 shows a closeup view of wire quick-connect 345 and power wire 330. Wire quick-connect 345 can be positioned close to ejector-tube interface 350 similar to interface connector 352, but need not be positioned at ejector-tube interface 350 in all aspects of the disclosed embodiments. Such positioning, however, does minimize wire movement in response to removal of auger ejector 224 from auger tube 320, as respective segments of wire quick-connect 345 can be secured to respective surfaces of ejector housing 310 and auger tube 320, respectively. This facilitates easy connection and disconnection, as well as easy re-connection upon replacement of auger ejector onto auger tube 320.

Figure 7 shows a closeup 700 image of an interface connector 352 according to further aspects of the disclosed embodiments. Interface connector 352 is one example of a suitable mechanism for connecting and disconnecting ejector housing 310 from auger tube 320 and should not be construed as limiting the scope of alternative or additional suitable interface connectors, as all such connectors known in the art or reasonably conveyed to one of ordinary skill in the art by way of the context provided herein are deemed to be within the scope of the present disclosure.

In the example shown by Figure 7, interface connector 352 includes a tube interface slot 754 secured to auger tube 320 near ejector-tuber interface 550, as well as a housing interface tab 752 secured to ejector housing 310 near ejector-tube interface 550. Housing interface tab 752 can be received into tube interface slot 754 so that matching fastener slots 756 therein are aligned. A fastener (*e.g.,* a pin, a bolt, a clasp, a cotter pin, a rod, and so on) inserted through the aligned fastener slots 756 can secure the housing interface tab to the tube interface slot 754, thereby securing ejector housing 310 to auger tube 320.

Figure 8 shows an image of an example ejector and screw auger removed from auger tube 800 according to further aspects of the disclosed embodiments. Screw auger 420 can be secured at a secured auger end 822 within a fixed housing bearing 812. Screw auger 420 can rotate within the fixed housing bearing 812, as well as be physically secured thereto. Accordingly, removal of ejector housing 310 from an auger tube disclosed herein can also remove screw auger 420 therefrom due to secured auger end 822 being secured within fixed housing bearing 812. A detachable auger end 824 is shown that can be removed from and reinserted to a second bearing (*e.g.,* a fixed coupler bearing 924 of Figure 9, *infra*) which also facilitates rotation of screw auger 420. Figure 9 depicts an end-view image 900 of an auger tube 320 with auger ejector 224 and screw auger 420 removed there from. When inserted fully into auger tube 320, detachable auger end 824 can be guided by auger device base support 922 into fixed coupler bearing 924. Auger device base support 922 can support screw auger 420 while screw auger 420 is within auger tube 320 but not inserted into fixed coupler bearing 924. When detachable auger end 824 is fully inserted into a bearing seat 926A of fixed coupler bearing 924 as shown in Figure 9A, screw auger 420 can be above auger device base support 922, suspended from bearing seat 926A at detachable auger end 824 and from fixed housing bearing 812 at secured auger end 822. This mitigates or avoids friction between screw auger 420 and auger device base support 922 during operation of screw auger 420, and also mitigates or avoids trapping of loose material between screw auger 420 and auger device base support in operation.

Figure 9A shows a closeup view 900A of fixed coupler bearing 924 within auger tube 320. In various aspects of the disclosed embodiments, auger tube can be secured to mow deck coupler 222 in part by fasteners 928A securing auger base support 922 and fixed coupler bearing to mow deck coupler 222. Fixed coupler bearing 924 further includes a bearing input 924A having wider diameter than detachable auger end 824 to facilitate receipt and guidance of detachable auger end 824 into bearing seat 926A of fixed coupler bearing 924.

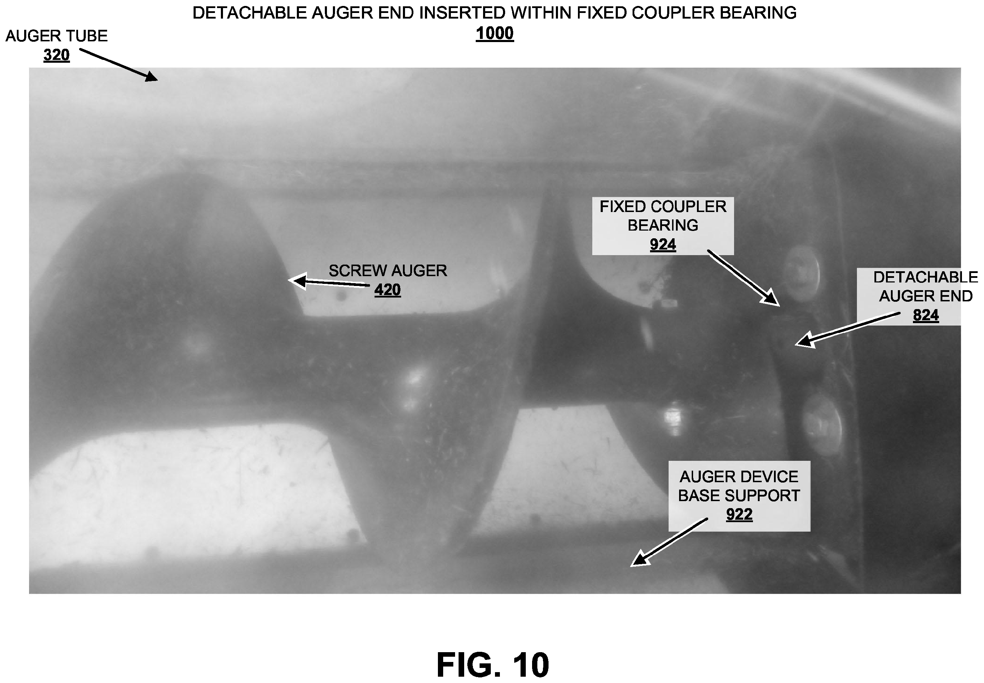

Figure 10 shows detachable auger end 824 of screw auger 420 inserted into fixed coupler bearing 924 with screw auger 420 and ejector housing secured to auger tube 320. In some embodiments of the disclosure, screw auger 420 can sit above auger device base support 922 and rotate with minimal or no direct physical contact to auger device base support 922 in operation.

Referring to Figure 11, shown is an example auger drive 1100 of an example auger device for a mowing apparatus, according to various aspects discussed herein. In the embodiment(s) shown, auger motor 340, located proximate to auger ejector 224 and a bagging system (not shown), can drive ejection implements (not shown) of auger ejector 224 and screw auger 420 that delivers material to auger ejector 224. Secured auger end 822 is shown exiting an opening in a rear of ejector housing 310 and secured to an auger pulley 1120 by an auger end - pulley drive fastener 1122. Rotation of auger pulley 1120 therefore drives rotation of secured auger end 822 and screw auger 420. Auger device 110 further includes a motor pulley 1140 attached to a drive output of auger motor 340. A belt 1150 can connect motor pulley 1140 and auger pulley 1120, such that rotation of motor pulley causes rotation of auger pulley 1120 (and secured auger end 822). A (adjustable) tensioner 1155 can be provided to generate (configurable) tension on belt 1150 to mitigate or avoid slippage of belt 1150 with respect to motor pulley 1140 and auger pulley 1120. For instance, tensioner 1155 can be adjustable to modify (e.g., increase or decrease) the tension on belt 1150 in some aspects of the disclosed embodiments.

In the embodiment shown, the drive shaft of auger motor 340 can be substantially parallel to that of secured auger end 822 and the screw auger. Auger motor 340. A tensioner 2630A can be provided to maintain a tension on drive belt 2640A and can be adjustable to adjust the tension in some aspects of the disclosed embodiments. Although not shown, in other embodiments, the shaft of auger motor 2635 can be at substantially any angle relative to that of the secured auger end 822, including perpendicular, parallel or even coaxial (e.g., and driven via a planetary gearset rather than belt 1150 and motor pulley 1140 and auger pulley 1120).

Figure 12 shows an example electric power source coupling 1200 according to further aspects of the disclosed embodiments. A mower 1210 is shown having a mow deck 1215 with mow blade spindle 1222 powered by a deck belt drive 1224. A drive coupler 1226 can be secured to mow blade spindle 1222 and a coupler belt 1228 can mechanically connect drive coupler 1226 to a generator pulley 1212 of a power generator 1210. Power generator 1210 can generate electric charge in response to motion of deck belt drive 1224 at a power takeoff of mower 1210. The electrical charge can be transferred at power wire 330 to provide power to an auger motor as disclosed herein. Figure 13 depicts an alternative power generator 1310. Power generator 1310 can be seated on a mow spindle cover 1315 of mow deck 1215 of mower 1210. A mow spindle coupler 1312 can secure power generator 1310 directly to a mow spindle (not shown) within mow spindle cover 1315. When the mow spindle rotates, power generator 1310 generates electric charge output at power wire 1330 to provide power to an auger motor disclosed herein.

Although the disclosure herein relates in general to systems, apparatuses, and methods employing auger(s) for moving material in connection with outdoor power equipment, for the purposes of illustration, specific embodiments are presented related to a scenario wherein the material is turf clippings and the outdoor power equipment is a mowing apparatus. Accordingly, while illustrated embodiments comprise specific features and/or details, the same and/or different features and/or details can be employed in other embodiments in addition to and/or instead of the specific features/details shown or described for moving turf clippings in connection with a mowing apparatus.

As one example, each of the augers shown and described in connection with example embodiments has had a uniform pitch (e.g., in terms of distance between adjacent flights and/or angle of flights) and been formed of a continuous rigid material. However, in various embodiments, one or more of these can vary, such as in the following non-limiting examples: the weight, density, and/or material of the auger can vary; the auger pitch can vary along the length of the auger (e.g., increasing and/or decreasing through part or all of its length); two or more rigid augers (or one or more flexible augers) in series could be employed, through a linear, piecewise linear, or curved auger tube; at least some of the auger can be flexible or brushed/bristled (e.g., all, an outer portion of some or all flights, etc.), which can potentially allow more opportunities for the auger to move rigid material (e.g., small stones, etc.) upward by allowing one or more flights of the auger to attempt to move and/or bypass lodged/stuck material instead of becoming stuck on material that cannot be dislodged initially; an outer edge of some or all of the auger can be sharpened, serrated, etc. to facilitate breaking apart some material (e.g., pieces of wood, etc.); some or all auger flights can have openings that allow air, water/moisture and/or some material to pass through; etc.

As another example, the speed and/or torque of rotation of the auger and/or ejection implements can be constant or can vary based on one or more conditions, such as: the material and/or properties of the material (e.g., density, weight, etc.), operator input (e.g., selection of an energy-saving mode, a turbo mode, etc.), operating conditions such as current battery level (e.g., automatically switching to an energy-saving mode at lower battery level, etc.) or vehicle speed (e.g., reducing power to the auger system at lower vehicle speeds, etc.), etc.

Additionally, while components are discussed herein as part of systems comprising other components for ease of illustration and to show potential interactions between components, in some embodiments, one or more of these components can be omitted or can be substituted with other elements. As an example, one embodiment can comprise a modified side discharge (*e.g.,* rearward-directed side discharge, *etc*.) connected to a mow deck coupler, which is connected to an auger tube and auger, which is driven by an auger motor that also drives one or more ejection implements of a clipping ejector to transfer material to a bagging system (*e.g.,* such an embodiment can be driven by and further comprise a motor, or can be driven via another source of power/motion of the outdoor power equipment such as the rotation of a mow spindle). However, another embodiment can be a clipping ejector to transfer material to a bagging system. Such an embodiment could be combined with any of a variety of means for transferring material to the clipping ejector, including those discussed herein, but also including a blower, etc. that receives clippings from a mow deck via one of a side or top discharge. Another embodiment could omit the clipping ejector and employ a bagging or collection system that receives material from the top end of an auger without employing a clipping ejector. A further embodiment could employ a modified side discharge (*e.g.,* rearward-directed side discharge, *etc*.) that transfers material to a bagging system connected to an output of the modified side discharge (*e.g.,* rearward-directed side discharge, *etc*.)*.* Another embodiment can comprise an auger and auger tube that receive material from an outdoor power equipment (*e.g.,* a mow deck of a mowing apparatus, brushes of a sweeper, etc.) and move material from a first end of the auger and auger tube to a second end of the auger and auger tube. Optionally such an embodiment can include one or more of a material ejector or a collection system. Additional embodiments can include one or more of a modified side discharge (*e.g.,* rearward-directed side discharge, *etc.),* a mow deck coupler, an auger tube and auger, and/or a material ejector.

Generally, the illustrated embodiments are not provided as strict limitations on how the disclosed aspects can be practiced by one of ordinary skill in the art but are intended to be provided as examples that can be modified, interchanged, added to or subtracted from as would be suitable to one of ordinary skill in the art to accomplish the purposes and objectives described herein. As an example, an arrangement of components depicted in one embodiment can be swapped with components depicted in another embodiment, optionally excluding some components or including other components illustrated in a third embodiment, according to design creativity of one of ordinary skill in the art. As a further example, components of disclosed devices can be implemented as connected to other components rather than included within the parent device. Alternatively, the opposite orientation can be implemented within the scope of the disclosure: one component (*e.g.,* auger motor 340) depicted separate from another component (*e.g.,* auger ejector 224) can be aggregated as a single component in some embodiments (*e.g.,* auger motor 340 can be internal to auger ejector 224 and secured to secured auger end 822 within ejector housing 310). Still further, components of disclosed machines /devices /sensors /control units can also interact with one or more other components not specifically described herein but known by those of skill in the art.

In regard to the various functions performed by the above described components, machines, apparatuses, devices, processes, control operations and the like, the terms (including a reference to a "means") used to describe such components, *etc.,* are intended to correspond, unless otherwise indicated, to any component which performs the specified function of the described component (*e.g.,* a functional equivalent), even though not structurally equivalent to the disclosed structure, which performs the function in the herein illustrated exemplary aspects of the embodiments. In this regard, it will also be recognized that the embodiments include a system as well as mechanical structures, mechanical drives, electronic or electro-mechanical drive controllers, and electronic hardware configured to implement the functions, or a computer-readable medium having computer-executable instructions for performing the acts or events of the various processes or control operations described herein.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be construed as being limited to those illustrations. Rather, any suitable combination or subset of elements from one drawing(s) can be applied to other embodiments in other drawings where suitable to one of ordinary skill in the art to accomplish objectives disclosed herein, objectives known in the art, or objectives and operation reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes in light thereof will be suggested to persons skilled in the art and are to be included within the spirit and purview of this application and scope of the appended claims.

## Claims

1. A conveyance system for an outdoor power equipment, comprising:
an auger housing having a first end near a discharge opening in a mow deck of the outdoor power equipment and a second end of the auger housing away from the mow deck of the outdoor power equipment;
a screw auger extending along at least a portion of an interior length of the auger housing, wherein the auger housing and screw auger are configured to transport material received from the discharge opening at a first end of the auger housing out of a second end of the auger housing, wherein the auger housing further comprises:
a base support underlying the screw auger, and
a housing tube that overlies the screw auger;
a mow deck coupler having a first end configured to secure to and to substantially cover at least a portion of the discharge opening of the mow deck, wherein a second end of the coupler is connected to the first end of the auger housing, and wherein the coupler is configured to receive the material from the discharge opening of the mow deck and to provide the material to the first end of the auger housing;
an ejector housing at a second end of the auger housing that receives the material from the discharge opening and distributes the material out from the second end of the auger housing; and
a decoupling mechanism that exposes the screw auger from an interior of the housing tube that overlies the screw auger.

2. The conveyance system of claim 1, wherein the decoupling mechanism disconnects the ejector housing and the screw auger from the auger housing and the mow deck coupler and facilitates removal of the screw auger from the interior of the auger housing and reinsertion of the screw auger within the interior of the auger housing.

3. The conveyance system of any preceding claim, wherein the decoupling mechanism disconnects the housing tube from the base support and the mow deck coupler and reconnects the housing tube to the base support and the mow deck coupler.

4. The conveyance system of any preceding claim, wherein the decoupling mechanism disconnects one longitudinal edge of the housing tube from a corresponding longitudinal edge of the base support and facilitates rotation of the housing tube away from the screw auger and the interior of the base support.

5. The conveyance system of any preceding claim, further comprising an auger motor configured to rotate the screw auger within the auger housing.

6. The conveyance system of claim 5, further comprising a pulley and belt assembly that drives rotation of the screw auger in response to power output by the auger motor, wherein the pulley and belt assembly comprise a motor pulley coupled to the auger motor, an auger pulley coupled to the screw auger and a belt coupling the motor pulley to the auger motor.

7. The conveyance system of any preceding claim, wherein the screw auger is rotated in response to a rotating component of the outdoor power equipment.

8. The conveyance system of any preceding claim, wherein the housing tube defines an elevated interior above the screw auger that provides an airflow above at least a portion of the length of the screw auger.

9. The conveyance system of any preceding claim, wherein the ejector housing is configured to expel the material via an output port into a material collection system of the outdoor power equipment.

10. The conveyance system of any preceding claim, further comprising a fixed coupler bearing within the mow deck coupler that removably receives the first end of the screw auger and facilitates rotation of the screw auger within the auger housing.

11. The conveyance system of claim 10, further comprising a fixed housing bearing within the ejector housing that receives a second end of the screw auger and facilitates rotation of the screw auger within the auger housing, and further comprising a fastener that physically fastens the second end of the screw auger to a rotation drive device of the conveyance system.

12. The conveyance system of any preceding claim, wherein the decoupling mechanism is a toolless mechanism that exposes the screw auger from the interior of the housing tube by operator hand.
